# EUROPÄISCHE PATENTANMELDUNG

(11) **EP 0 726 402 A1**
(43) Veröffentlichungstag der Anmeldung: **14.08.1996**
(21) Anmeldenummer: 96100197.1
(22) Anmeldetag: 09.01.1996
(51) Int. Cl.: F16C 1/26

(54) **Betätigingszug welcher freidrehend in einem Befestigungselement aufgenommen ist**

(30) Priorität: 08.02.1995 DE 29501995 U
(71) Anmelder: VOFA-WERK XAVIER VORBRÜGGEN GmbH & Co. KG, D-40549 Düsseldorf (DE)
(72) Erfinder:
(74) Vertreter: Paul, Dieter-Alfred, Dipl.-Ing.

(57) **Zusammenfassung**

Ein Betätigungszug (1,2,3) insbesondere zur Betätigung von Heizungsklappen in Fahrzeugen weist einen Betätigungsmantel (4) und eine in diesem axial beweglich geführte Betätigungsseele (5) auf, wobei der Betätigungsmantel Endstücke (7,8,9) aufweist, welche jeweils ein Rastelement (21,22,23) zur Lagefixierung der Enden des Betätigungsmantels aufweist. Damit der Betätigungszug wesentlich einfacher herzustellen und zudem gewährleistet ist, daß es bei der Montage nicht zu Verspannungen des Betätigungsmantels kommt, sind die Rastelemente (21,22,23) drehbar an dem Endstück (7,8,9) angeordnet.

## Beschreibung

Die Erfindung betrifft einen Betätigungszug insbesondere zur Betätigung von Heizungsklappen an Fahrzeugen mit einem Betätigungsmantel und einer in diesem axial beweglich geführten Betägigungsseele, wobei der Betätigungsmantel Endstücke aufweist, welche jeweils ein Rastelement zur Lagefixierung der Enden des Betätigungsmantels aufweist.

Mechanische Betätigungszüge sind in vielfältigen Ausführungsformen und für die verschiedensten Zwecke bekannt (vgl. Leihseder, Mechanische Betätigungszüge, Verlag Moderne Industrie, 1994). In ihrem grundsätzlichen Aufbau bestehen sie aus einem schlauchförmigen, biegsamen Betätigungsmantel, in dem eine meist als Drahtlitze oder -seil ausgebildete Betätigungsseele axial beweglich geführt ist. Die Betätigungsseele ragt an beiden Enden aus dem Betätigungsmantel heraus und besitzt dort Anschlußstücke, um sie einerends mit dem Betätigungsorgan und anderenends mit dem zu betätigenden Organ verbinden zu können. Dabei können Betätigungsmantel und Betätigungsseele auch so ausgebildet sein, daß nicht nur eine Zugkraftübertragung möglich ist, sondern auch Druckkräfte weitergegeben werden können.

Der Betätigungsmantel eines solchen Betätigungszuges wird gewöhnlich an den Enden über dort angesetzte Endstücke festgelegt. Sofern der Betätigungszug zur Betätigung von Heizungsklappen verwendet wird, geschieht die Festlegung einerends an der Betätigungsarmatur und anderenends am Gehäuse der Heizklappe. Hierzu weisen die Endstücke Rastelemente auf, mit deren Hilfe sie in entsprechend ausgebildete Rasteinrichtungen an den ortsfesten Teilen des Betätigungsorgans bzw. des zu betätigenden Organs eingesetzt und verrastet werden können. Diese Rastelemente sind vorzugsweise als Clipfahnen ausgebbildet, die eine Art Verriegelung bewirken.

Bei den bekannten Betätigungszügen sind die Endstücke einschließlich der Rastelemente drehfest mit dem Betätigungsmantel verbunden. Damit sie in die jeweils vorgesehenen Rasteinrichtungen passen, müssen die Rastelemente in der richtigen Winkelstellung an dem Betätigungsmantel angebracht sein. Bei schon geringen Winkelabweichungen zwischen den beiden Endstücken kommt es bei der Montage zu Torsionsverspannungen des Betätigungsmantels mit der Folge, daß der Betätigungszug schwergängig wird. Auch wird die Montage selbst erschwert. Bei der Herstellung des Betätigungszuges müssen deshalb besondere Vorrichtungen vorgesehen werden, die das winkelgenaue Anbringen der Endstücke an dem Betätigungsmantel sicherstellen.

Der Erfindung liegt die Aufgabe zugrunde, einen Betätigungszug der eingangs genannten Art so auszubilden, daß er wesentlich einfacher herzustellen und zudem gewährleistet ist, daß es bei der Montage nicht zu Verspannungen des Betätigungsmantels kommt.

Diese Aufgabe wird erfindungsgemäß dadurch gelöst, daß die Rastelemente drehbar an dem Endstück angeordnet sind. Diese Ausbildung erleichtert die Herstellung, weil es nicht mehr notwendig ist, die Endstücke in einer bestimmten Winkelstellung an dem Betägigungsmantel anzubringen. Bei der Montage können die Rastelemente in die jeweils vorgesehene Lage gedreht werden, was die Montage wesentlich erleichtert und das Entstehen von Torsionsspannungen in dem Betätigungsmantel ausschließt. Insgesamt erhält man durch die Erfindung einen kostengünstiger herzustellenden und einfacher zu montierenden Betätigungszug, der zudem leichtgängig ist.

In Ausbildung der Erfindung ist vorgesehen, daß die Endstücke über die Enden des Betätigungsmantels vorstehende Lagerhülsen aufweisen, auf denen die Rastelemente sitzen. Damit die Rastelemente nicht von den Lagerhülsen abrutschen können, sollten die Lagerhülsen an ihren freien Enden verdickt sein.

Die Lagerhülsen können zylindrische Außenform haben. Es besteht jedoch auch die Möglichkeit, Ringstege oder Ringnuten vorzusehen, wobei die Rastelemente innenseitig auf die Profilierung der Lagerhülsen angepaßt sind.

Die Rastelemente selbst können jede beliebige Formgebung haben. Als Lager eignet sich in erster Linie eine Bohrung, Es besteht jedoch auch die Möglichkeit, eine clipartig gebogene Klammer vorzusehen, mit der das Rastelement auf die Lagerhülse aufgeschoben werden kann. Die Rastelemente können eine Clipfahne gegebenenfalls mit Rastvorsprüngen aufweisen.

In der Zeichnung ist die Erfindung an Hand von Ausführungsbeispielen näher veranschaulicht. Es zeigen:
- Figur 1: das linksseitige Ende eines Betätigungszuges mit Längsschnitt durch ein Endstück;
- Figuren 2 und 3: Vorderansicht und Längsschnitt durch ein Rastelement des Endstückes gemäß Figur 1;
- Figur 4: das linksseitige Ende eines weiteren Drahtzuges mit Endstück im Längsschnitt;
- Figur 5: einen Längsschnitt durch das Endstück gemäß Figur 4 ohne Rastelement;
- Figuren 6 und 7: Vorderansicht und einen Längsschnitt durch das Rastelement zu dem Endstück gemäß den Figuren 4 und 5;
- Figur 8: das linksseitige Ende eines dritten Drahtzuges mit Endstück im Längsschnitt;
- Figuren 9 und 10̸: das Rastelement zu dem Endstück gemäß Figur 8 im Längsschnitt und in der Vorderansicht.

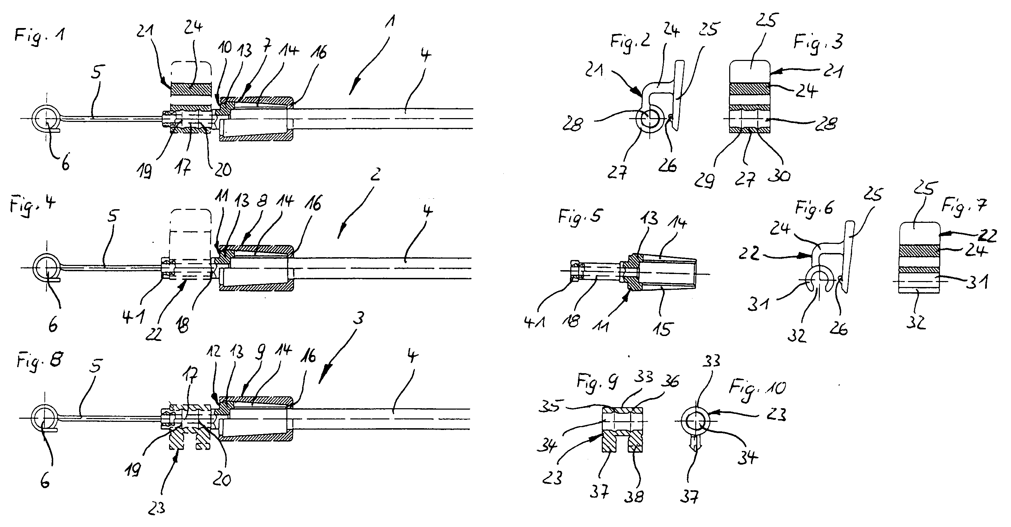

Die in den Figuren 1, 4 und 8 dargestellten Betätigungszüge 1, 2, 3 weisen folgende Gemeinsamkeiten auf, welche mit denselben Bezugsziffern versehen sind. Sie haben einen flexiblen, schlauchförmigen Betätigungsmantel 4, in dem axial beweglich ein Betätigungsdraht 5 geführt ist, welcher endseitig zu einer Drahtschlaufe 6 gebogen ist. Über die Drahtschlaufe 6 kann der Betätigungsdraht 5 an ein Betätigungsorgan oder ein zu betätigendes Organ angebracht werden. Die jeweils nicht gezeigten Enden der Betätigungszüge 1, 2, 3 sind gleich ausgebildet.

Auf das Ende des Betätigungsmantels 4 ist jeweils ein Endstück 7, 8, 9 aufgesetzt. Jedes Endstück 7, 8, 9 hat ein Hülsenelement 10̸, 11, 12, welche einen Aufnahmehülsenabschnitt 13 aufweist, der in axialer Richtung über den Umfang verteilt mit Schlitzen 14, 15 versehen ist. In die Aufnahmenhülsenabschnitte 13 sind die dortigen Enden des Betätigungsmantels 4 eingesetzt. Eine über den Aufnahmehülsenabschnitt 13 gestülpte Muffe 16 verhindert ein radiales Aufweiten der Aufnahmehülsenabschnitte 13 und sichert so den festen Halt der Endstücke 7, 8, 9 an den Betätigungsmänteln 4. Dabei hinterfaßt die Muffe 16 den Aufnahmehülsenabschnitt 13.

An die Aufnahmehülsenabschnitte 13 der Hülsenelemente 10̸, 11, 12 schließen sich - jeweils vom Ende des Betätigungsmantels 4 weggerichtet - Lagerhülsen 17, 18 an. Die Lagerhülsen 17 gemäß den Figuren 1 und 8 sind nicht zylindrisch, sondern weisen zwei im Abstand zueinander angeordnete, ringstegähnliche Vorsprünge 19, 20̸ auf. Dagegen ist die Lagerhülse 18 gemäß Figur 4 zylindrisch ausgebildet. Die Lagerhülse 18 weist einen Endringsteg 41 auf (Figur 5).

Auf den Lagerhülsen 17, 18 sitzen Rastelemente 21, 22, 23, und zwar drehbar gelagert. Die Rastelemente 21 gemäß den Figuren 2 und 3 und den Figuren 6 und 7 sind in ihrer grundsätzlichen Formgebung gleich. Sie weisen einen rechtwinklig gebogenen Schenkel 24 auf, an den sich eine Clipfahne 25 anschließt. Diese hat einen Rastvorsprung 26. Durch Verdrehen kann die Clipfahne 25 mit dem Rastvorsprung 26 hinter ein entsprechendes Gehäuseteil fassen, wodurch das Endstück 7 und damit der Betätigungsmantel 4 festgelegt werden.

Das Rastelement 21 gemäß den Figuren 2 und 3 sitzt über ein Lagerteil 27 auf der Lagerhülse 17. Das Lagerteil 27 hat eine Bohrung 28, welche innenseitig Ringnuten 29, 30̸ aufweist, die zu den Vorsprüngen 19, 20̸ an der Lagerhülse 17 passen. Das Rastelement 21 ist vom freien Ende der Lagerhülse 17 auf diese aufgeschoben. Dabei rasten die Vorsprünge 19, 20̸ in die Ringnut 29, 30̸ ein und sorgen so für eine axiale Festlegung des Rastelementes 21 auf der Lagerhülse 17. Das Rastelement 21 ist dann gegenüber der Lagerhülse 17 verdrehbar.

Das Rastelement 22 gemäß den Figuren 6 und 7 unterscheidet sich von dem gemäß den Figuren 2 und 3 nur dadurch, daß das Lagerteil 31 klammerartig mit einem Schlitz 32 ausgebildet ist. Die Breite des Schlitzes 32 ist so bemessen, daß das Rastelement 22 radial auf die Lagerhülse 18 aufgesetzt werden kann, wobei das Lagerteil 31 clipartig auf der Lagerhülse 18 einrastet.

Das Rastelement 23 gemäß den Figuren 9 und 10̸ hat ein geschlossenes Lagerteil 33 mit einer Bohrung 34, welche innenseitig zwei Ringnuten 35, 36 aufweist. Wie bei dem Ausführungsbeispiel gemäß den Figuren 1 bis 3 ist dieses Rastelement 23 wieder von der freien Seite der Lagerhülse 17 aufgeschoben worden, wobei die Vorsprünge 19, 20̸ in die Ringnuten 35, 36 einfassen und auf diese Weise für eine axiale, jedoch drehbare Festlegung des Rastelements 23 auf der Lagerhülse 17 sorgen. An der Unterseite des Lagerteils 33 sind im Querschnitt pfeilförmige Zapfen 37, 38 angeformt. Sie können in entsprechend geformte Ausnehmungen in einem Gehäuseteil eingesetzt werden, wobei auf Grund der Pfeilform eine Verrastung eintritt.

## Patentansprüche

1. Betätigungszug insbesondere zur Betätigung von Heizungsklappen in Fahrzeugen mit einem Betätigungsmantel und einer in diesem axial beweglich geführten Betätigungsseele, wobei der Betätigungsmantel Endstücke aufweist, welche jeweils ein Rastelement zur Lagefixierung der Enden des Betätigungsmantels aufweist,
dadurch gekennzeichnet, daß die Rastelemente (21, 22, 23) drehbar an dem Endstück (7, 8, 9) angeordnet sind.

2. Betätigungszug nach Anspruch 1,
dadurch gekennzeichnet, daß die Endstücke (7, 8, 9) über die Enden des Betätigungsmantels (4) vorspringende Lagerhülsen (17, 18) aufweisen, auf denen die Rastelemente (21, 22, 23) sitzen.

3. Betätigungszug nach Anspruch 2,
dadurch gekennzeichnet, daß die Lagerhülsen (18) an ihren freien Enden verdickt sind.

4. Betätigungszug nach Anspruch 2 oder 3,
dadurch gekennzeichnet, daß die Lagerhülsen (17) Ringstege (19, 20̸) oder -nuten aufweisen und die Rastelemente (21, 23) innenseitig hieran angepaßt sind.

5. Betätigungszug nach einem der Ansprüche 1 bis 4,
dadurch gekennzeichnet, daß die Rastelemente (21, 23) eine Bohrung (28, 34) als Lager aufweisen.

6. Betätigungszug nach einem der Ansprüche 2 bis 5,
dadurch gekennzeichnet, daß die Rastelemente (22) eine clipartig gebogene Klammer (31) für den Sitz auf der Lagerhülse (18) aufweisen.

7. Betätigungszug nach einem der Ansprüche 1 bis 6,
dadurch gekennzeichnet, daß die Rastelemente (21, 22, 23) eine Clipfahne (25) aufweisen.

8. Betätigungszug nach Anspruch 7,
dadurch gekennzeichnet, daß die Clipfahne (25) Rastvorsprünge (26) aufweist.
